# FASCICULE DE BREVET EUROPEEN

(11) **EP 2 503 842 B1**
(45) Date de publication et mention de la délivrance du brevet: **25.11.2015**
(21) Numéro de dépôt: 12001742.1
(22) Date de dépôt: 14.03.2012
(51) Int. Cl.: H05B 3/22, B64D 15/12, H01R 13/05

(54) **Dispositif d'alimentation électrique d'un élément résistif, et système électrique muni dudit dispositif et dudit élément résistif**
Vorrichtung zur Stromversorgung eines Widerstandselements, und mit einer solchen Vorrichtung und einem solchen Widerstandselement ausgestattetes elektrisches System
Device for supplying power to a resistance element, and electrical system provided with said device and said resistance element

(30) Priorité: 22.03.2011 FR 1100857
(43) Date de publication de la demande: 26.09.2012
(73) Titulaire: Airbus Helicopters, 13725 Marignane Cedex (FR)
(72) Inventeur: Amari, André, 60520 La Chapelle en Serval (FR); Brunner, Daniel, 95230 Soisy-sous-Montmorency (FR); Gaffiero, Jacques, 75017 Paris (FR); Lanouette, Cédric, 92120 Montrouge (FR)
(74) Mandataire: GPI & Associés

(56) Documents cités:
- BE-A- 670 696
- US-A- 2 260 365
- US-A- 2 260 509
- US-A- 2 866 172
- US-A- 3 397 383

## Description

La présente invention concerne un dispositif d'alimentation électrique d'un élément résistif, et système électrique muni dudit dispositif et dudit élément résistif.

Plus particulièrement, l'invention se situe dans le domaine technique des tapis chauffants électriques d'aéronef en matériaux composites utilisés par exemple dans un contexte de dégivrage et antigivrage de surfaces aérodynamiques.

Le problème du givrage de surfaces aérodynamiques est bien connu dans l'industrie aéronautique. On entend par givrage la formation plus ou moins rapide d'un dépôt de glace sur certaines parties de l'aéronef. Ce dépôt de glace alourdit l'aéronef, parfois dans des proportions considérables, altère l'écoulement aérodynamique par modification de la forme de la surface aérodynamique et dégrade ainsi fortement ses performances.

Par ailleurs, l'antigivrage consiste à empêcher le givrage.

Ce problème est souvent traité en équipant la surface aérodynamique d'un tapis chauffant. Un tel tapis chauffant comporte un élément résistif muni d'une pluralité de couches de fibres électriquement conductrices, chaque couche comportant un tissu muni de fibres de carbone, par exemple. En étant traversé par un courant électrique, l'élément résistif chauffe par effet Joule la surface aérodynamique sur laquelle il est implanté de manière à la dégivrer ou à l'empêcher de givrer.

Pour alimenter électriquement l'élément résistif, on équipe le tapis chauffant d'un dispositif d'alimentation électrique. Pour limiter les actions de maintenance, le dispositif d'alimentation électrique doit favorablement être solidement lié à l'élément résistif afin de résister notamment à des sollicitations en fatigue. De plus, il est à noter que le cheminement d'un courant électrique du dispositif d'alimentation électrique vers l'élément résistif induit parfois des concentrations de densité de courant.

L'arrière plan technologique inclut une pluralité de documents parmi lesquels on trouve le document FR 2 867 011, le document WO 2006/077157, et le document US 5 824 996.

Par exemple, le document FR 2 867 011 présente un dispositif d'alimentation électrique d'un élément résistif. Ce dispositif d'alimentation électrique est pourvu d'au moins une plaquette métallique reliée à un fil d'alimentation, cette plaquette étant pourvue d'au moins un organe connecteur fixé à au moins une couche de fibres électriquement conductrices de l'élément résistif.

Le document WO 2006/077157 présente un dispositif d'alimentation électrique d'au moins deux tissus de carbone noyés dans un matériau qui n'est pas électriquement conducteur.

Chaque tissu s'étendant longitudinalement à partir d'une section d'extrémité, chaque section d'extrémité est en contact avec un matériau électriquement conducteur relié à un conducteur électrique.

Pour optimiser la résistance électrique entre chaque tissu de carbone et ledit matériau électriquement conducteur, les sections d'extrémité sont coupées diagonalement afin de maximiser leur surface.

Il est à noter que dans le cadre d'un tapis chauffant de pales d'un rotor de giravion, l'intégration de cette technologie parait délicate. En effet, il semble difficile de couper des tissus non polymérisés en diagonale.

Par suite, les tapis chauffants de pales en matériaux composites étant généralement polymérisés concomitamment à la polymérisation des autres organes de la pale, il semble difficile d'utiliser dans ce cadre la suggestion précédente.

Le document US 5 824 996 suggère l'utilisation d'une plaquette, l'élément résistif étant plié autour de la plaquette.

Les documents US 2 260 509, US 2 260 365, US 2 866 172, US 3 397 383 présentent chacun une prise comportant deux fiches, chaque fiche ayant une lame recourbée.

Ces documents sont donc éloignés de l'invention en étant relatifs à des prises de courant dédiées à des contacts amovibles, et non pas à une solidarisation à des couches électriquement conductrices d'un élément résistif.

Le document BE 670 696 présente un raccord pour fil électrique.

La présente invention a alors pour objet de proposer un dispositif d'alimentation électrique apte à être fixé de manière résistante d'un point de vue mécanique à un élément résistif, et à au moins améliorer le passage progressif du courant entre ce dispositif d'alimentation électrique et l'élément résistif.

Selon l'invention, un dispositif d'alimentation électrique est muni d'un moyen de liaison électrique métallique électriquement conducteur solidaire d'un fil d'alimentation électrique, le moyen de liaison comportant une première portion reliée au fil d'alimentation suivie d'une deuxième portion s'étendant longitudinalement apte à être adhérée de manière inamovible à un élément résistif pourvu d'une pluralité de couches électriquement conductrices.

Ce dispositif d'alimentation électrique est notamment remarquable en ce que, le moyen de liaison comportant un corps plein d'un seul tenant muni de la première portion et de la deuxième portion, la deuxième portion est effilée en présentant une épaisseur selon une direction en élévation, cette épaisseur étant dégressive à partir de la première portion en allant vers une extrémité libre de la deuxième portion, la deuxième portion ayant au moins une lumière traversant de part en part la deuxième portion selon la direction en élévation.

On note que la deuxième portion s'étend notamment en élévation d'une face supérieure vers une face inférieure distinctes l'une de l'autre.

L'invention comprend alors une deuxième portion munie d'un corps plein effilé, ce corps plein étant de fait distinct d'une lame recourbée et de l'enseignement éloigné du document US 2 260 509 notamment.

Cette deuxième portion peut alors être un cylindre obtenu à l'aide d'une génératrice passant par un point variable décrivant une forme effilée tel qu'un triangle. Une coupe longitudinale de la deuxième portion peut avoir une forme triangulaire.

Par suite, la résistance électrique de la deuxième portion est dégressive afin de minimiser les risques d'apparition de points chauds.

De plus, chaque couche électriquement conductrice est amenée à coopérer avec une lumière. Dès lors, cet enchâssement des couches électriquement conductrices favorisent l'accrochage de ces couches électriquement conductrices au dispositif d'alimentation électrique.

Par ailleurs, le dispositif d'alimentation électrique peut comporter une ou plusieurs des caractéristiques additionnelles qui suivent.

Par exemple, la deuxième portion peut présenter une face supérieure et une face inférieure lisses aptes à être fixées à un élément résistif, la face inférieure et la face supérieure étant percées pour présenter la ou les lumières du dispositif d'alimentation électrique.

Des aspérités d'une face représentent des points d'accrochages intéressants d'un point du vue résistance mécanique. Toutefois, ces aspérités peuvent générer des pointes constituants un chemin de passage privilégié du courant électrique pouvant à l'extrême être à l'origine de points chauds susceptibles d'endommager le dispositif et de réduire sa durée de vie.

Au moins une des faces inférieure et supérieure présente éventuellement un traitement de surface chimique de décapage pour être lisse.

De plus, au moins une des faces inférieure et supérieure présente optionnellement une couche primaire d'adhésion. En effet, les couches électriquement conductrices peuvent posséder une résine d'imprégnation. Cependant, ces résines d'imprégnation sont parfois peu adhésives. Dès lors, la couche primaire d'adhésion favorise la fixation du dispositif d'alimentation électrique à l'élément résistif.

Selon un autre aspect, le moyen de liaison comporte du nickel 201. De manière surprenante, ce matériau est électriquement conducteur tout en permettant de braser un fil d'alimentation sur la première portion. De plus, ce matériau présente un compromis acceptable en termes de stabilité chimique et permet une adhésion acceptable de couches électriquement conductrices, notamment à base de fibres de carbone préimprégnées.

Par ailleurs, l'épaisseur dégressive de la deuxième portion peut décroitre d'une épaisseur de 0.5 millimètre à une épaisseur de 0.1 millimètre, la deuxième portion s'étendant longitudinalement sur une longueur comprise entre 30 millimètres et 40 millimètres.

Par ailleurs, la deuxième portion est éventuellement symétrique, une face supérieure et une face inférieure étant symétriques par rapport à un plan médian défini par une direction longitudinale et une direction transversale orthogonales à la direction en élévation.

Outre un dispositif d'alimentation électrique, l'invention vise aussi un système électrique tel qu'un tapis chauffant.

Ce système électrique est muni d'un élément résistif comportant une pluralité de couches en fibres électriquement conductrices superposées selon une direction en élévation, chaque couche s'étendant selon une direction transversale et une direction longitudinale, l'élément résistif étant en contact avec un dispositif d'alimentation électrique muni d'un moyen de liaison électrique métallique électriquement conducteur solidaire d'un fil d'alimentation électrique, le moyen de liaison comportant une première portion reliée au fil d'alimentation suivie d'une deuxième portion s'étendant longitudinalement reliée à l'élément résistif, chacune desdites couches adhérant de manière inamovible à ladite deuxième portion.

Ce système électrique est notamment remarquable en ce que le dispositif de fixation est selon l'invention, la deuxième portion étant effilée en présentant une épaisseur selon une direction en élévation, cette épaisseur étant dégressive à partir de la première portion en allant vers une extrémité libre de la deuxième portion, la deuxième portion ayant au moins une lumière traversant de part en part la deuxième portion selon la direction en élévation.

De plus ce système électrique peut posséder une ou plusieurs des caractéristiques suivantes.

Par exemple, chaque couche s'étendant longitudinalement à partir d'une zone de liaison, chaque zone de liaison s'étendant en élévation entre deux surfaces de contact, une surface de contact de chaque couche est solidarisée longitudinalement et directement à la deuxième portion en étant en contact avec une face de cette deuxième portion et en pénétrant dans ladite lumière.

Ainsi, l'invention propose de faire adhérer chaque couche électriquement conductrice à la deuxième portion du dispositif d'alimentation électrique par une surface de contact, et non pas par une section d'extrémité, la section d'extrémité étant en l'occurrence la section reliant en élévation les deux surfaces de contact à l'extrémité de la couche.

Le transfert électrique entre une couche de fibres électriquement conductrices et la deuxième portion est alors réalisé par la zone de liaison sur une grande surface, et non pas ponctuellement par une section d'extrémité.

Cette surface de contact est de plus agencée longitudinalement sur la deuxième portion, l'épaisseur de la deuxième portion étant dégressive selon cette même direction longitudinale. Il en résulte une répartition efficace du flux de courant électrique de la deuxième portion vers chaque couche de fibres électriquement conductrices, cette répartition minimisant le risque d'apparition de zone de concentration de courant.

Par ailleurs, la deuxième portion peut être noyée dans l'élément résistif, chaque zone de liaison d'un premier groupe de couches en fibres électriquement conductrices étant fixée à une face supérieure de ladite deuxième portion et chaque zone de liaison d'un deuxième groupe de tissus étant fixée à une face inférieure de ladite deuxième portion.

Selon un autre aspect, l'invention vise une pale munie d'un système électrique chauffant. Ce système électrique étant du type présenté précédemment.

De plus, l'invention vise un procédé de fabrication d'un système électrique. Selon ce procédé,
- on fabrique un moyen de liaison métallique comportant une première portion suivie d'une deuxième portion s'étendant longitudinalement, la deuxième portion étant effilée en présentant une épaisseur dégressive selon une direction en élévation à partir de la première portion, au moins une lumière étant ménagée dans la deuxième portion pour traverser de part en part cette deuxième portion selon la direction en élévation,
- on drape les couches en fibres électriquement conductrices d'un élément résistif, chaque couche en fibres électriquement conductrices ayant une zone de liaison s'étendant en élévation entre deux surfaces de contact, une surface de contact de chaque zone de liaison étant posée sur la deuxième portion,
- on polymérise l'ensemble comprenant lesdites couches en fibres électriquement conductrices et le moyen de liaison,
- on fixe un fil d'alimentation électrique sur la première portion.

Ce procédé permet alors le passage progressif du courant entre le moyen de liaison métallique et l'élément résistif.

De plus, la résistance électrique de la deuxième portion est dégressive afin de minimiser de manière surprenante les risques d'apparition de points chauds.

Enfin, ce procédé permet d'optimiser l'accrochage des couches électriquement conductrices sur le moyen de liaison métallique.

L'invention et ses avantages apparaîtront avec plus de détails dans le cadre de la description qui suit avec des exemples de réalisation donnés à titre illustratif en référence aux figures annexées qui représentent :
- la figure 1, une vue d'un dispositif d'alimentation électrique selon l'invention,
- la figure 2, une vue schématique d'une première réalisation d'un système électrique selon l'invention,
- la figure 3, une coupe de ladite première réalisation,
- la figure 4, une vue schématique d'une deuxième réalisation d'un système électrique selon l'invention, et
- la figure 5, une vue explicitant le procédé mis en oeuvre.

Les éléments présents dans plusieurs figures distinctes sont affectés d'une seule et même référence.

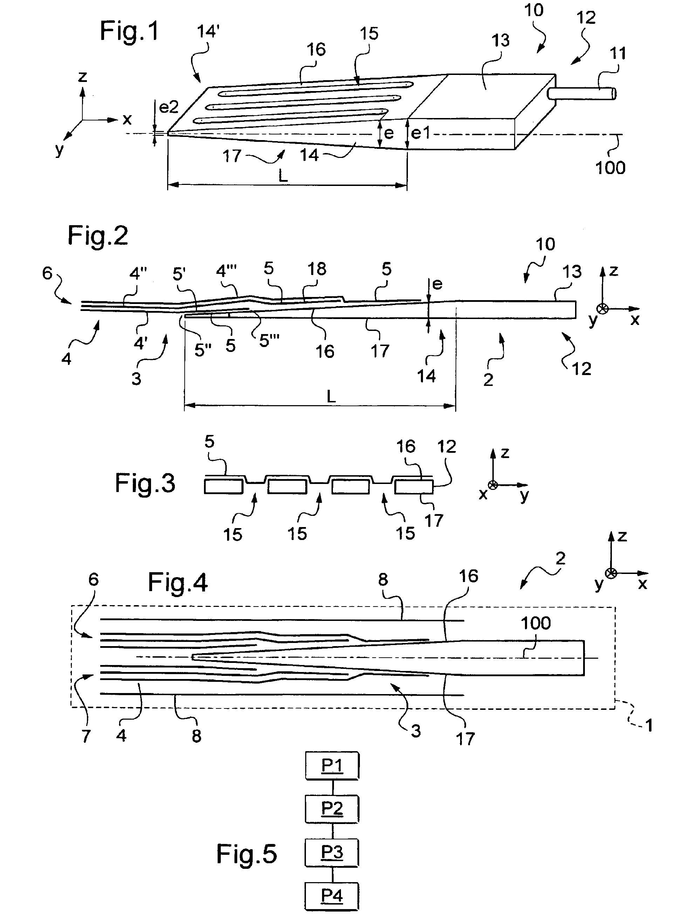

On note que trois directions X, Y et Z orthogonales les unes par rapport aux autres sont représentées sur les figures 1 à 4.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

La figure 1 présente un dispositif d'alimentation électrique 10 muni d'un fil d'alimentation électrique 11 et d'un moyen de liaison 12 pour alimenter électriquement un élément résistif.

Le moyen de liaison 12 peut comporter alors une première portion 13 pour être relié électriquement au fil d'alimentation 11 et une deuxième portion 14 pour être relié électriquement à un élément résistif.

Ainsi, le fil d'alimentation 11 est relié électriquement sur l'exemple représenté à la face supérieure de la première portion 13, éventuellement par brasage, soudage ou tout autre moyen mécanique comme le sertissage, le rivetage, le vissage ou le collage avec de la colle électriquement conductrice.

Par ailleurs, la deuxième portion 14 présente successivement en élévation une face supérieure 16 et une face inférieure 17 s'étendant longitudinalement et transversalement. L'épaisseur e de cette deuxième portion 14 est alors disposée selon une direction en élévation, en représentant la distance séparant la face supérieure 16 de la face inférieure 17 selon la direction en élévation.

La deuxième portion est avantageusement effilée. Par suite, en partant de l'extrémité de la deuxième portion 14 fixée à la première portion 13 et en allant vers l'extrémité libre 14' de cette deuxième portion 14, l'épaisseur e de la deuxième portion 14 est dégressive.

Par exemple, selon une variante, l'épaisseur e décroit à partir de la première portion 13 d'une épaisseur e1 valant 0.5 millimètre à une épaisseur e2 valant 0.1 millimètre, la deuxième portion s'étendant longitudinalement sur une longueur L comprise entre 30 millimètres et 40 millimètres.

Le moyen de liaison peut être fabriqué à l'aide d'un matériau métallique électriquement conducteur, pouvant être brasé à un fil d'alimentation, ayant des caractéristiques notamment de stabilité chimique compatibles avec des fibres de carbone. Favorablement, ce moyen de liaison est alors réalisé à l'aide de métaux plus ou moins alliés à base de nickel cuivre, zinc et d'argent

Par ailleurs, la face supérieure 16 et / ou la face inférieure 17 destinée(s) à être en contact avec des couches en fibres électriquement conductrices sont éventuellement lisses. A cet effet, la face supérieure 16 et / ou la face inférieure présente un traitement de surface chimique de décapage.

De plus, la face supérieure 16 et / ou la face inférieure peut présenter une couche primaire d'adhésion 18, par exemple à base de résine époxy appliquée après un traitement de surface de type attaque chimique par un acide.

Selon un autre aspect, selon la variante de la figure 1, la deuxième portion 14 est symétrique par rapport à un plan médian 100, la face supérieure 16 et la face inférieure 17 étant symétriques par rapport à ce plan médian 100 défini par une direction longitudinale et une direction transversale orthogonales à ladite direction en élévation.

Selon un autre aspect, la deuxième portion 14 comporte au moins une lumière 15 traversant de part en part la deuxième portion 14 selon la direction en élévation, chaque lumière traversant dès lors la deuxième portion en allant de la face supérieure 16 vers la face inférieure 17.

Chaque lumière peut être un trou oblong en élévation s'étendant longitudinalement afin d'être dirigé selon le sens suivi par les fibres des couches électriquement conductrice fixées à la deuxième portion 14.

La figure 2 présente un système électrique 1 muni d'un élément résistif 3 et d'un dispositif d'alimentation électrique 10 comprenant un moyen de liaison 12.

L'élément résistif 3 comporte une pluralité de couches 4 en fibres électriquement conductrices qui sont superposées selon une direction en élévation. Chaque couche est munie par exemple de fibres de carbone préimprégnées s'étendant selon une direction longitudinale, à savoir selon la direction selon laquelle s'étend la deuxième portion 14 du moyen de fixation 12 et notamment les lumières 15 de cette deuxième portion 14.

Chaque couche 4 s'étend plus particulièrement longitudinalement à partir d'une zone de liaison vers une zone distale. Chaque zone de liaison 5 possède alors une surface de contact 5', 5" solidarisée longitudinalement et directement à la deuxième portion 14 en étant en contact avec une face de cette deuxième portion 14.

Les couches 4', 4", 4"' de l'élément résistif présentent de plus une longueur différente afin d'être disposées sur cette deuxième portion selon une disposition en escalier.

La conformation de la deuxième portion d'épaisseur dégressive du moyen de liaison 12 et des couches successives 4', 4", 4"' de longueurs variables permet de disposer d'un ensemble ne présentant aucune surépaisseur locale. A ce titre, si l'épaisseur totale des couches 4 de l'élément résistif est supérieure à l'épaisseur de la première portion 13 du moyen de liaison 12, seules quelques couches 4' seront coupées. Il suffit que la première portion 13 reste accessible pour assurer la liaison mécanique et électrique avec le fil d'alimentation 11.

Dès lors, une première couche 4' inclut une zone de liaison 5 délimitée en élévation par une surface de contact supérieure 5' et une surface de contact inférieure 5". La zone de liaison est alors en contact avec l'extrémité libre de la face supérieure 16 de la deuxième portion par sa surface de contact 5" inférieure, et non pas par sa section extrémale 5"'.

Il en va de même pour une deuxième couche 4" superposée sur la première couche 4'. Cependant, on note que la deuxième couche 4" a une longueur supérieure à la longueur de la première couche 4' afin d'être en contact avec un tronçon intermédiaire de la face supérieure 16.

Enfin, une troisième couche 4'" superposée sur la deuxième couche 4" possède une longueur supérieure à la longueur de la deuxième couche 4" afin d'être en contact avec un tronçon de proximité de la deuxième portion 14 accolé à la première portion 13.

Chaque couche de fibres électriquement conductrices présente une zone de contact substantielle avec la deuxième portion pour optimiser la répartition du courant électrique dans l'élément résistif, et ainsi minimiser le risque de surchauffe.

De plus, la résistance électrique résultante calculée à partir de la résistance électrique du moyen de liaison 12 et de la résistance électrique des fibres de l'élément résistif est dégressive au niveau de la deuxième portion 14, en partant de la première portion 13. Cette variation de résistance électrique résultante progressive et continue permet de minimiser les risques de surchauffe.

En outre, cette disposition optimise la résistance mécanique du système électrique, notamment en fatigue, en ne présentant pas des évolutions brutales de sections travaillantes

On note que l'encombrement du dispositif d'alimentation électrique est favorablement sensiblement contenu dans l'encombrement de l'élément résistif.

Selon un autre aspect, en référence à la figure 3, chaque zone de liaison d'une couche de fibres électriquement conductrices pénètre partiellement dans les lumières 15, pour optimiser l'ancrage mécanique des couches 4 sur la deuxième portion 14.

En référence à la figure 2, selon le premier mode de réalisation, l'élément résistif 3 comprend un unique groupe 6 de couches 4 de fibres électriquement conductrices fixées à une unique face de la deuxième portion 14.

La figure 4 présente une pale 1 munie d'un système électrique selon un deuxième mode de réalisation préféré.

Selon ce deuxième mode de réalisation, la deuxième portion 14 est noyée dans l'élément résistif 3. En effet, chaque zone de liaison 5 d'un premier groupe 6 de couches en fibres électriquement conductrices est fixée à une face supérieure 16 de la deuxième portion 14, chaque zone de liaison 5 d'un deuxième groupe 7 de couches en fibres électriquement conductrices étant fixée à une face inférieure 17 de la deuxième portion 14.

On note que le système électrique 3 peut aussi comprendre des couches en fibres de verre 8 de part et d'autre de l'élément résistif.

La figure 5 explicite un procédé de fabrication d'une telle pale 1.

Durant une première étape P1, on fabrique un moyen de liaison 12 métallique selon l'invention.

Dès lors, durant un deuxième étape P2, on drape les couches 4 en fibres électriquement conductrices d'un élément résistif 3, chaque couche 4 ayant une zone de liaison s'étendant en élévation entre deux surfaces de contact 5', 5", une surface de contact 5', 5" de chaque zone de liaison 5 étant posée sur la deuxième portion 14 du moyen de liaison 12.

Par exemple, on drape les couches d'un premier groupe de couches de fibres électriquement conductrices, puis les couches d'un deuxième groupe de couches de fibres électriquement conductrices de part et d'autre de la deuxième portion.

En parallèle, la zone de la première portion sur laquelle sera connecté le fil d'alimentation 11 est protégée par un revêtement anti-adhérent, du scotch en téflon® par exemple. Ensuite, on peut recouvrir l'ensemble comprenant les couches 4 en fibres électriquement conductrices et le moyen de liaison 12 de fibres de verre par exemple

Durant une troisième étape P3, on polymérise l'ensemble comprenant les couches 4 en fibres électriquement conductrices et le moyen de liaison 12.

Enfin, durant une étape P4, on fixe un fil d'alimentation 11 électrique sur la première portion 13.

Si un revêtement anti-adhérent a été placé sur la première portion durant la deuxième étape, le revêtement anti-adhérent est retiré. Le fil d'alimentation 11 peut alors être connecté à la première portion 13, par brasage par exemple.

Si nécessaire, le fil d'alimentation électrique 11 est connecté à la première portion 13 avant la polymérisation du système électrique.

Il est à noter que durant la deuxième étape, il est possible de placer les différents organes de la pale 1 autour de l'ensemble comprenant les couches 4 en fibres électriquement conductrices et le moyen de liaison 12. Ainsi, durant la troisième étape, on polymérise la pale équipée de son système électrique 3, un tapis chauffant en l'occurrence.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif d'alimentation électrique (10) muni d'un moyen de liaison (12) électrique métallique électriquement conducteur solidaire d'un fil d'alimentation (11) électrique, ledit moyen de liaison (12) comportant une première portion (13) reliée audit fil d'alimentation (11) suivie d'une deuxième portion (14) s'étendant longitudinalement apte à être adhérée de manière inamovible à un élément résistif (3) pourvu d'une pluralité de couches (4) électriquement conductrices
**caractérisé en ce que**, le moyen de liaison comportant un corps plein d'un seul tenant muni de la première portion et de la deuxième portion, ladite deuxième portion (14) est effilée en présentant une épaisseur (e) selon une direction en élévation, cette épaisseur (e) étant dégressive à partir de ladite première portion (13) en allant vers une extrémité libre (14') de la deuxième portion, ladite deuxième portion (14) ayant au moins une lumière (15) traversant de part en part ladite deuxième portion (14) selon ladite direction en élévation.

2. Dispositif selon la revendication 1,
**caractérisé en ce que** ladite deuxième portion (14) présente une face supérieure (16) et une face inférieure (17) lisses aptes à être fixées à un élément résistif (3), et la face supérieure (16) et la face inférieure (17) étant percées pour présenter ladite lumière (15).

3. Dispositif selon la revendication 2,
**caractérisé en ce qu'**au moins une desdites faces supérieure (16) et inférieure (17) présente un traitement de surface chimique de décapage.

4. Dispositif selon l'une quelconque des revendications 2 à 3, **caractérisé en ce qu'**au moins une desdites faces supérieure (16) et inférieure (17) présente une couche primaire d'adhésion (18).

5. Dispositif selon l'une quelconque des revendications 1 à 4,
**caractérisé en ce que** ledit moyen de liaison (12) comporte du nickel 201.

6. Dispositif selon l'une quelconque des revendications 1 à 5,
**caractérisé en ce que** ladite épaisseur (e) décroit d'une épaisseur 0.5 millimètre à une épaisseur de 0.1 millimètre, ladite deuxième portion s'étendant longitudinalement sur une longueur (L) comprise entre 30 millimètres et 40 millimètres.

7. Dispositif selon l'une quelconque des revendications 1 à 6,
**caractérisé en ce que** ladite deuxième portion (14) est symétrique, une face supérieure (16) et une face inférieure (17) étant symétriques par rapport à un plan médian (100) défini par une direction longitudinale et une direction transversale orthogonales à ladite direction en élévation.

8. Système électrique (1) muni d'un élément résistif (3) comportant une pluralité de couches (4) en fibres électriquement conductrices superposées selon une direction en élévation, chaque couche (4) s'étendant selon une direction transversale et une direction longitudinal, ledit élément résistif (3) étant en contact avec un dispositif d'alimentation électrique (10) muni d'un moyen de liaison (12) électrique métallique électriquement conducteur solidaire d'un fil d'alimentation électrique (11), le moyen de liaison (12) comportant une première portion (13) reliée audit fil d'alimentation (11) suivie d'une deuxième portion (14) s'étendant longitudinalement reliée audit élément résistif (3),
**caractérisé en ce que** ledit dispositif de fixation (10) est selon l'une quelconque des revendications précédentes, ladite deuxième portion (14) étant effilée en présentant une épaisseur (e) selon une direction en élévation, cette épaisseur (e) étant dégressive à partir de ladite première portion (13) en allant vers une extrémité libre de la deuxième portion, ladite deuxième portion (14) ayant au moins une lumière (15) traversant de part en part ladite deuxième portion (14) selon ladite direction en élévation, chacune desdites couches adhérant de manière inamovible à ladite deuxième portion.

9. Système électrique selon la revendication 8,
**caractérisé en ce que** chaque couche (4) s'étendant longitudinalement à partir d'une zone de liaison (5), une surface de contact (5', 5") de chaque couche est solidarisée longitudinalement et directement à la deuxième portion (14) en étant en contact avec une face de cette deuxième portion (14) et en pénétrant dans ladite lumière (15).

10. Système électrique selon la revendication 8,
**caractérisé en ce que** ladite deuxième portion (14) est noyée dans ledit élément résistif (3), chaque zone de liaison (5) d'un premier groupe (6) de couches en fibres électriquement conductrices étant fixée à une face supérieure (16) de ladite deuxième portion (14) et chaque zone de liaison (5) d'un deuxième groupe (7) de couches en fibres électriquement conductrices étant fixée à une face inférieure (17) de ladite deuxième portion (14).

11. Pale (1) muni d'un système électrique (2) chauffant,
**caractérisé en ce que** ledit système électrique (2) est selon l'une quelconque des revendications 8 à 10.

12. Procédé de fabrication d'un système électrique (1) selon la revendication 8,
**caractérisé en ce que** :
- on fabrique un moyen de liaison (12) métallique comportant une première portion (13) suivie d'une deuxième portion (14) s'étendant longitudinalement, ladite deuxième portion (14) étant effilée en présentant une épaisseur dégressive selon une direction en élévation à partir de ladite première portion (13), au moins une lumière (15) étant ménagée dans ladite deuxième portion (14) pour traverser de part en part cette deuxième portion (14) selon ladite direction en élévation,
- on drape les couches (4) en fibres électriquement conductrices d'un élément résistif (3), chaque couche (4) ayant une zone de liaison s'étendant en élévation entre deux surfaces de contact (5', 5"), une surface de contact (5', 5") de chaque zone de liaison (5) étant posée sur ladite deuxième portion (14),
- on polymérise l'ensemble comprenant lesdites couches (4) en fibres électriquement conductrices et ledit moyen de liaison (12),
- on fixe un fil d'alimentation (11) électrique sur ladite première portion (13).

## Patentansprüche

1. Vorrichtung (10) zur Stromversorgung mit einem metallischen, elektrisch leitenden elektrischen Verbindungsmittel (12), welches mit einem elektrischen Versorgungskabel (11) fest verbunden ist, wobei das Verbindungsmittel (12) einen ersten Abschnitt (13) aufweist, der mit dem Versorgungskabel (12) verbunden ist, gefolgt von einem zweiten Abschnitt (14), der sich längs erstreckt und unlösbar an ein Widerstandselement (3) geklebt werden kann, welches mit einer Mehrzahl von elektrisch leitenden Schichten (4) versehen ist, **dadurch gekennzeichnet, dass** das Verbindungsmittel einen einstückigen massiven Körper aufweist, der mit dem ersten Abschnitt und dem zweiten Abschnitt versehen ist, wobei der zweite Abschnitt (14) spitz zulaufend ist und eine Höhe (e) in vertikaler Richtung aufweist, die ausgehend von dem ersten Abschnitt (13) in Richtung auf ein freies Ende (14') des zweiten Abschnitts abnimmt, wobei der zweite Abschnitt (14) mindestens einen Kanal (15) aufweist, der den zweiten Abschnitt (14) in der vertikalen Richtung von einer Seite zur anderen durchquert.

2. Vorrichtung nach Anspruch 1,
**dadurch gekennzeichnet, dass** der zweite Abschnitt (14) eine glatte obere Fläche (16) und eine glatte untere Fläche (17) aufweist, die an einem Widerstandselement (3) befestigt werden können, und wobei die obere Fläche (16) und die untere Fläche (17) durchstoßen sind, um den Kanal (15) zu bilden.

3. Vorrichtung nach Anspruch 2,
**dadurch gekennzeichnet, dass** mindestens eine der oberen Fläche (16) und der unteren Fläche (17) eine chemische Oberflächen-Ätzbehandlung erfahren hat.

4. Vorrichtung nach einem der Ansprüche 2 bis 3,
**dadurch gekennzeichnet, dass** mindestens eine der oberen Fläche (16) und der unteren Fläche (17) eine primäre Klebeschicht (18) aufweist.

5. Vorrichtung nach einem der Ansprüche 1 bis 4,
**dadurch gekennzeichnet, dass** das Verbindungsmittel (12) Nickel 201 aufweist.

6. Vorrichtung nach einem der Ansprüche 1 bis 5,
**dadurch gekennzeichnet, dass** die Dicke (e) ausgehend von einer Dicke von 0,5 mm abnimmt auf eine Dicke von 0,1 mm, wobei der zweite Abschnitt sich längs über eine Länge (L) erstreckt, die zwischen 30 und 40 mm liegt.

7. Vorrichtung nach einem der Ansprüche 1 bis 6,
**dadurch gekennzeichnet, dass** der zweite Abschnitt (14) symmetrisch ist, wobei eine obere Fläche (16) und eine untere Fläche (17) symmetrisch bezüglich einer Mittelebene (100) sind, die durch eine Längsrichtung und eine Querrichtung, die senkrecht zu der vertikalen Richtung verlaufen, definiert ist.

8. Elektrisches System (1) mit einem Widerstandselement (3), welches eine Mehrzahl von Schichten (4) aus elektrisch leitenden Fasern aufweist, die in einer vertikalen Richtung geschichtet sind, wobei jede Schicht (4) sich in einer Querrichtung und einer Längsrichtung erstreckt, wobei das Widerstandselement (3) in Kontakt mit einer elektrischen Versorgungsvorrichtung (10) steht, die mit einem metallischen, elektrisch leitenden elektrischen Verbindungsmittel (12) versehen ist, das mit einem elektrischen Versorgungskabel (11) fest verbunden ist, wobei das Verbindungsmittel (12) einen ersten Abschnitt (13) aufweist, der mit dem Versorgungskabel (11) verbunden ist, gefolgt von einem zweiten Abschnitt (14), der sich in Längsrichtung erstreckt und mit dem Widerstandselement (3) verbunden ist,
**dadurch gekennzeichnet, dass** die Befestigungsvorrichtung (10) eine Befestigungsvorrichtung nach einem der vorstehenden Ansprüche ist, wobei der zweite Abschnitt (14) spitz zulaufend ist und in vertikaler Richtung eine Dicke (e) aufweist, die ausgehend von dem ersten Abschnitt (13) in Richtung auf ein freies Ende des zweiten Abschnitts abnimmt, wobei der zweite Abschnitt (14) mindestens einen Kanal (15) aufweist, der den zweiten Abschnitt (14) von einer Seite zur anderen in vertikaler Richtung durchquert, wobei jede der Schichten unlösbar an dem zweiten Abschnitt klebt.

9. Elektrisches System nach Anspruch 8,
**dadurch gekennzeichnet, dass** jede Schicht (4) sich längs ausgehend von einem Verbindungsbereich (5) aus erstreckt, wobei eine Kontaktfläche (5', 5") jeder Schicht längs und direkt an dem zweiten Abschnitt (14) befestigt ist und in Kontakt mit einer Seite dieses zweiten Abschnitts (14) steht und in den Kanal (15) eindringt.

10. Elektrisches System nach Anspruch 8,
**dadurch gekennzeichnet, dass** der zweite Abschnitt (14) in dem Widerstandselement (3) eingebettet ist, wobei jeder Verbindungsbereich (5) einer ersten Gruppe (6) von Schichten aus elektrisch leitenden Fasern an einer oberen Fläche (16) des zweiten Abschnitts (14) befestigt ist und jeder Verbindungsbereich (5) einer zweiten Gruppe (7) von Schichten aus elektrisch leitenden Fasern an einer unteren Fläche (17) des zweiten Abschnitts (14) befestigt ist.

11. Flügel (1) mit einem elektrisch heizenden System (2),
**dadurch gekennzeichnet, dass** das elektrische System (2) ein elektrisches System nach einem der Ansprüche 8 bis 10 ist.

12. Verfahren zur Herstellung eines elektrischen Systems (1) nach Anspruch 8,
**dadurch gekennzeichnet, dass**
- ein elektrisches Verbindungsmittel (12) hergestellt wird, welches einen ersten Abschnitt (13) gefolgt von einem zweiten Abschnitt (14) aufweist, der sich in Längsrichtung erstreckt, wobei der zweite Abschnitt (14) spitz zulaufend ist und eine abnehmende Dicke in vertikaler Richtung ausgehend von dem ersten Abschnitt (13) aufweist, wobei mindestens ein Kanal (15) in dem zweiten Abschnitt (14) eingearbeitet ist, um diesen zweiten Abschnitt (14) von einer Seite zur anderen in Vertikalrichtung zu durchqueren,
- die Schichten (4) aus elektrisch leitenden Fasern mit einem Widerstandselement (3) umhüllt werden, wobei jede Schicht (4) einen Verbindungsbereich aufweist, der sich in Vertikalrichtung zwischen zwei Kontaktflächen (5', 5") erstreckt, wobei eine Kontaktfläche (5', 5") jedes Verbindungsbereichs (5) auf dem zweiten Abschnitt (14) angeordnet ist,
- die Einheit, die die Schichten (4) aus elektrisch leitenden Fasern und die Verbindungsmittel (12) aufweist, polymerisiert wird,
- ein elektrisches Versorgungskabel (11) auf dem ersten Abschnitt (13) befestigt wird.

## Claims

1. Electrical supply device (10) provided with an electrically-conductive metal electrical connection means (12) secured to an electrical supply wire (11), said connection means (12) comprising a first portion (13) connected to said supply wire (11) followed by a second portion (14) extending longitudinally suitable for being adhered irremovably to a resistive element (3) provided with a plurality of electrically-conductive layers (4)
**characterised in that**, the connection means comprising a one-piece solid body provided with the first portion and with the second portion, said second portion (14) is tapered having a thickness (e) in a direction in elevation, said thickness (e) decreasing starting from said first portion (13) going towards a free end (14') of the second portion, said second portion (14) having at least one slot (15) passing right through said second portion (14) in said direction in elevation.

2. Device according to claim 1,
**characterised in that** said second portion (14) has an upper face (16) and a lower face (17) which are smooth and suitable for being fastened to a resistive element (3), and the upper face (16) and the lower face (17) being pierced in order to have said slot (15).

3. Device according to claim 2,
**characterised in that** at least one of said upper face (16) and said lower face (17) has a chemical surface treatment for cleaning.

4. Device according to any one of claims 2 to 3,
**characterised in that** at least one of said upper face (16) and said lower face (17) has a primary adhesion layer (18).

5. Device according to any one of claims 1 to 4,
**characterised in that** said connection means (12) comprises nickel 201.

6. Device according to any one of claims 1 to 5,
**characterised in that** said thickness (e) decreases from a thickness of 0.5 millimetre to a thickness of 0.1 millimetre, said second portion extending longitudinally over a length (L) comprised between 30 millimetres and 40 millimetres.

7. Device according to any one of claims 1 to 6,
**characterised in that** said second portion (14) is symmetrical, an upper face (16) and a lower face (17) being symmetrical with respect to a mid-plane (100) defined by a longitudinal direction and a transverse direction which are orthogonal to said direction in elevation.

8. Electrical system (1) provided with a resistive element (3) comprising a plurality of layers (4) of electrically-conductive fibres superposed in a direction in elevation, each layer (4) extending in a transverse direction and a longitudinal direction, said resistive element (3) being in contact with an electrical supply device (10) provided with an electrically-conductive metal electrical connection means (12) secured to an electrical supply wire (11), the connection means (12) comprising a first portion (13) connected to said supply wire (11) followed by a second portion (14) extending longitudinally connected to said resistive element (3),
**characterised in that** said fastening device (10) is according to any one of the preceding claims, said second portion (14) being tapered having a thickness (e) in a direction in elevation, said thickness (e) decreasing starting from said first portion (13) going towards a free end of the second portion, said second portion (14) having at least one slot (15) passing right through said second portion (14) in said direction in elevation, each of said layers adhering irremovably to said second portion.

9. Electrical system according to claim 8,
**characterised in that** each layer (4) extending longitudinally from a connection zone (5), a contact surface (5', 5") of each layer is secured longitudinally and directly to the second portion (14), being in contact with a face of said second portion (14) and penetrating into said slot (15).

10. Electrical system according to claim 8,
**characterised in that** said second portion (14) is embedded in said resistive element (3), each connection zone (5) of a first group (6) of layers of electrically-conductive fibres being fastened to an upper face (16) of said second portion (14) and each connection zone (5) of a second group (7) of layers of electrically-conductive fibres being fastened to a lower face (17) of said second portion (14).

11. Blade (1) provided with an electrical heating system (2), **characterised in that** said electrical system (2) is according to any one of claim 8 to 10.

12. Method of fabricating an electrical system (1) according to claim 8,
**characterised in that**:
- a metal connection means (12) comprising a first portion (13) followed by a second portion (14) extending longitudinally is fabricated, said second portion (14) being tapered having a thickness decreasing in a direction in elevation starting from said first portion (13), at least one slot (15) being formed in said second portion (14) to pass right through said second portion (14) in said direction in elevation,
- the layers (4) of electrically conductive fibres of a resistive element (3) are draped, each layer (4) having a connection zone extending in elevation between two contact surfaces (5',5"), a contact surface (5',5") of each connection zone (5) being placed on said second portion (4),
- the assembly comprising said layers (4) of electrically-conductive fibres and said connection means (12) is polymerised,
- an electrical supply wire (11) is fastened to said first portion (13).
